# EUROPÄISCHE PATENTSCHRIFT

(11) **EP 0 733 220 B1**
(45) Veröffentlichungstag und Bekanntmachung des Hinweises auf die Patenterteilung: **25.08.1999**
(21) Anmeldenummer: 95904427.2
(22) Anmeldetag: 06.12.1994
(51) Int. Cl.: G01V 15/00

(54) **DATENTRÄGER ZUR IDENTIFIZIERUNG VON OBJEKTEN UND VERFAHREN ZU SEINER STEUERUNG**
DATA MEDIUM FOR IDENTIFYING OBJECTS AND PROCESS FOR ITS CONTROL
SUPPORT DE DONNEES PERMETTANT D'IDENTIFIER DES OBJETS ET SON PROCEDE DE COMMANDE

(30) Priorität: 10.12.1993 AT 249393; 10.12.1993 AT 249493
(43) Veröffentlichungstag der Anmeldung: 25.09.1996
(73) Patentinhaber: Siemens Aktiengesellschaft Österreich, 1210 Wien (AT)
(72) Erfinder: GILA, Janos, A-1170 Wien (AT); HRABY, Günther, A-1120 Wien (AT); VEITH, Peter, Ernst, A-1190 Wien (AT); SCHIEFER, Martin, A-3180 Lilienfeld (AT); ASPERGER, Karl, A-1030 Wien (AT)
(74) Vertreter: Peham, Alois, Dipl.-Ing.
(86) Internationale Anmeldenummer: EP9404063
(87) Internationale Veröffentlichungsnummer: WO9516214

(56) Entgegenhaltungen:
- EP-A- 0 520 455
- US-A- 5 036 308
- US-A- 5 206 639
- US-A- 5 218 189

## Beschreibung

Die gegenständliche Erfindung betrifft einen Datenträger zur Identifizierung von Objekten, insbesondere von Gütern, mit einem Datengeber und einer Energiequelle, sowie ein Verfahren zur Steuerung des Datenträgers.

Datenträger der obgenannten Art werden insbesondere an Transportgütern angebracht, um diese während des Produktionsvorganges und ihres Einsatzes erfassen zu können. Hierdurch können Produktionsvorgang und Transport bzw. Einsatz dieser Güter gesteuert werden.

Ein Beispiel derartiger Güter sind Gasflaschen, welche in Europa in einer Anzahl von etwa 70 Millionen Stück und in den USA in einer Anzahl von mehr als 100 Millionen Stück in Verwendung stehen, wobei sie in Abfüllanlagen beispielsweise mit Sauerstoff für medizinische Einrichtungen gefüllt und hierauf zu den Verbrauchern transportiert werden. Die leeren Flaschen werden wieder in die Abfüllanlagen transportiert.

Da diese Gasflaschen aus Stahlblech gefertigt sind, können sie etwa zehn Jahre lang in Umlauf gehalten werden. Aufgrund unterschiedlicher Umlaufwege, unterschiedlicher Einsatzzwecke und unterschiedlicher Zeitabläufe, treten jedoch pro Jahr Verluste an Gasflaschen in der Größenordnung von bis zu 3 % der insgesamt vorhandenen Menge auf.

Um diese Verluste zu verringern ist es bekannt, die Gasflaschen mit einem Datenträger zu versehen, der eine individuelle Kennung trägt, die berührungslos abgefragt werden kann und so zur Identifizierung und Verfolgung der Gasflaschen dient.

Bekannte Datenträger mit einem von einer Batterie gespeisten Datensender haben allerdings einen relativ hohen Energieverbrauch und sind aufgrund ihres komplexen Aufbaues in der Herstellung relativ teuer.

Alternativ dazu wurde daher vorgeschlagen, Datenträger mit induktiv gespeisten Datensendern auszugestalten. Diese Datensender haben jedoch nur geringe Reichweiten, sodaß die Identifizierung der Objekte nur über geringe Entfernungen möglich ist, wodurch sich beim Transport der Flaschen beispielsweise mittels Lastkraftwagen Probleme ergeben.

Der gegenständlichen Erfindung liegt daher die Aufgabe zugrunde, einen Datenträger zur Identifizierung von Objekten mit nur geringem Energieverbrauch und hoher Abfragereichweite sowie ein Verfahren zu seiner Ansteuerung anzugeben.

Die Lösung dieser Aufgabe erfolgt erfindungsgemäß mit einem Datenträger der eingangs genannten Art, der zumindest einen HF-Signalreflektor enthält, dessen Eigenfrequenz durch den Datengeber steuerbar ist und durch ein Verfahren zur Steuerung des Datenträgers bei dem die Steuerung der Reflektorantenne durch den Datengeber periodisch wiederkehrend erfolgt, bei dem die Periodendauer einem vorgegebenen Zeitraum entspricht, bei dem dieser Zeitraum in zumindest zwei Abschnitte unterteilt ist und in einem ersten Abschnitt die Eigenfrequenz der Reflektorantenne durch den Datengeber in der Weise moduliert wird, daß mittels einer Abtasteinrichtung eine individuelle Kennung abfragbar ist, und bei dem in einem zweiten Abschnitt keine Steuerung der Eigenfrequenz der Reflektorantenne erfolgt.

Der erfindungsgemäße Datenträger zeichnet sich durch geringen Energieverbrauch aus, da er kein aktives Sendeelement enthält.

Das erfindungsgemäße Verfahren zur Steuerung des Datenträgers führt zu einer weiteren Reduktion des Energieverbrauchs und bei gleichzeitigem Betrieb mehrerer Datenträger zu einer geringen Blockierrate und damit zu einer hohen Erkennungswahrscheinlichkeit.

Vorteilhaft ist es dabei, wenn der mindestens eine Signalreflektor des Datenträgers durch eine Schlitzantenne gebildet ist. Dadurch werden Umgebungseinflüsse auf ein Minimum reduziert.

Günstig ist es ferner, wenn die Schlitzantenne aus einem mit einer Metallschicht versehenen Träger aus Kunststoff gefertigt ist, wobei die Metallschicht einen Schlitz aufweist. Dadurch ist eine einfache und kostengünstige Herstellung möglich.

Vorteilhaft ist auch eine Ausgestaltung der Erfindung, bei der zur Steuerung der Eigenfrequenz des Signalreflektors eine vom Datengeber steuerbare Impedanz vorgesehen ist. Damit werden bewegliche Teile vermieden und die Störanfälligkeit des Signalreflektors verringert.

Vorteilhaft ist auch eine Ausgestaltung der Erfindung nach Anspruch 5, da hierdurch eine besonders effektive Modulation der Eigenfrequenz erfolgt.

Günstige Realisierungen der Energiequelle sind durch die Ansprüche 6 und 7 gegeben.

Eine Ausgestaltung der Erfindung in der Weise, daß der Datenträger mit einem Kunststoffmaterial umspritzt ist, verringert die Gefahr von mechanischen Schäden und erhöht damit die Zuverlässigkeit.

Vorteilhaft ist es auch, wenn mehrere teilkreisförmig gekrümmte Signalreflektoren zu einem Kreisring zusammengefügt sind, wodurch der Datenträger besonders einfach auf dem Hals einer Flasche, insbesondere einer Gasflasche angebracht werden kann.

Vorteilhaft ist es auch, wenn zur Abfrage des Datenträgers eine Abtasteinrichtung mit einer HF-Sendeeinrichtung und einer HF-Empfangseinrichtung sowie einer Auswerteschaltung vorgesehen ist.

Eine vorteilhafte Ausgestaltung des erfindungsgemäßen Verfahrens erhält man dann, wenn die zeitliche Länge des zweiten Abschnitts(B) ein Vielfaches der zeitlichen Länge des ersten Abschnittes (A) beträgt.

Vorteilhaft ist es auch, wenn der erste Abschnitt ein Synchronisationssignal und ein Kontrollsignal aufweist. Damit kann der Schaltungsaufwand einer Abtasteinrichtung gering gehalten werden und die Gefahr von Fehlabtastungen verringert werden.

Die Erkennungsrate wird weiter erhöht, wenn die individuelle Kennung jedes Datenträgers als digitaler Code im Datengeber gespeichert ist, wenn dieser Code in eine orthogonale Impulsfolge umgesetzt wird mit welcher die Eigenfrequenz des Signalreflektors moduliert wird.

Die Blockierrate kann dadurch verringert werden, daß in einer Gruppe von Datengebern die vorgegebenen Zeiträume unterschiedlich lang sind, wobei sie vorzugsweise jeweils ein ganzzahliges Mehrfaches einer vorgegebenen Zeitdauer betragen und daß die Zeiträume zueinander zeitlich verschoben sind, und bzw. oder wenn durch den Einsatz von Zeitsteuerelementen mit begrenzter Genauigkeit die vorgegebenen Zeiträume (A und B) unterschiedliche Längen aufweisen.

Die Erfindung wird anhand von Figuren näher erläutert. Es zeigen beispielhaft:
Fig. 1 ein Blockschaltbild einer Abtasteinrichtung für einen erfindungsgemäßen Datenträger,
Fig.2 ein Blockschaltbild des Datenträgers,
Fig.3a und 3b schematische Darstellungen von Reflektorantennen,
Fig.4 einen Datenträger für Gasflaschen,
Fig.5 die Montage eines Datenträgers auf eine Gasflasche,
Fig.6 eine Anlage zur Identifizierung von Gasflaschen,
Fig.7 ein Zeitdiagramm der Frequenzsteuerung der Reflektorantenne eines Datengebers,
Fig.8 das Zeitdiagramm eines ersten zeitlichen Abschnittes dieser Frequenzsteuerung
Fig.9 eine Ergänzung des Zeitdiagrammes gemäß Fig.8 und
Fig.10 die Wahrscheinlichkeit von gegenseitigen Störungen über den Abtastzeitraum hinweg.

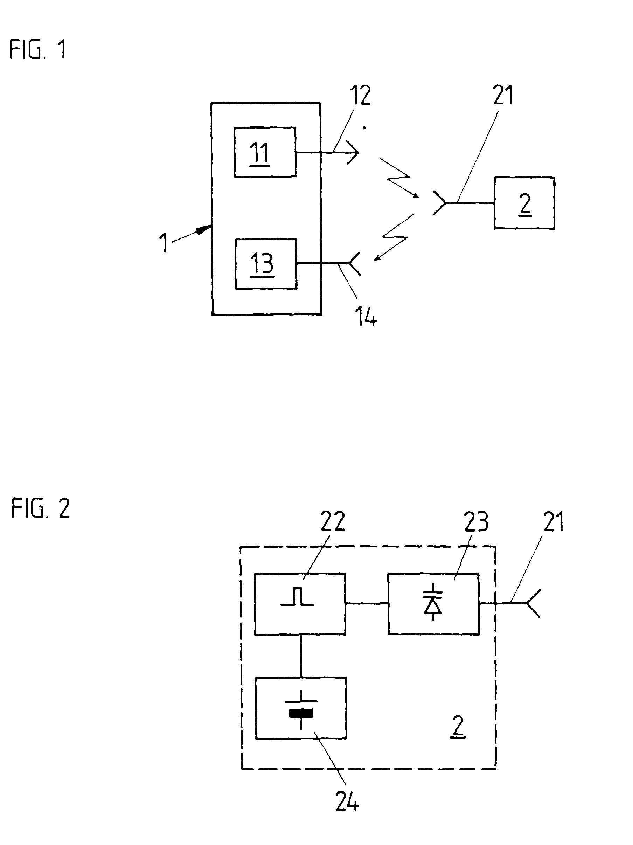

Die Abtasteinrichtung nach Fig. 1 umfaßt eine Lesestation 1 , mittels welcher der einem Datenträger 2 eingeprägte Code abfragbar ist. Die Lesestation 1 enthält einen HF-Sender 11, eine daran angeschlossene Sendeantenne 12 und eine Empfangsstation 13 mit einer Empfangsantenne 14. Der Datenträger 2 weist eine Reflektorantenne 21 auf.

Zur Erhöhung der Erkennungssicherheit kann es zweckmäßig sein, die Abtasteinrichtung mit mehreren Sende-und Empfangsantennen 12,14 und/oder auch mit mehreren HF-Sendern 11 und Empfangsstationen 13 auszustatten, die gegebenenfalls auch mit unterschiedlichen Frequenzen arbeiten können.
Die Wirkungsweise der Abtasteinrichtung ist wie folgt:

Die von der Lesestation 1 über die Sendeantenne 12 emittierten HF-Signale gelangen zum Datenträger 2, wobei sie dann, wenn die Frequenz des Sendesignals mit der Eigenfrequenz der Reflektorantenne 21 des Datenträgers 2 übereinstimmt, von dieser absorbiert werden, wogegen sie dann, wenn die Frequenzen nicht übereinstimmen, in Abhängigkeit von den Unterschieden in den Frequenzen reflektiert werden. Da die Eigenfrequenz der Reflektorantenne 21 des Datenträgers in periodischen Zeitabständen durch eine Impulsfolge entsprechend dem digitalen Code des Datenträgers 2 moduliert wird, erfolgt hierdurch eine Abfrage des Codes und damit der individuellen Kennung des betreffenden Datenträgers 2, wodurch das zugehörige Objekt identifiziert werden kann.

Der Datenträger 2 , welcher anhand der Fig. 2 erläutert ist, enthält die Reflektorantenne 21, einen Datengeber 22, eine steuerbare Impedanz 23 und eine Batterie als Energiequelle 24.

Die Energiequelle 24 kann beispielsweise auch mittels induktiv aufladbarem Speisekreis, oder mittels Photovoltaik-Element realisiert werden.

Die steuerbare Impedanz 23 wird vom Datengeber 22, welchem die individuelle Kennung des betreffenden Datenträgers eingeprägt ist und der von der Batterie 24 gespeist wird, angesteuert. Durch die steuerbare Impedanz 23 erfolgt dann eine Modulation der Eigenfrequenz der Reflektorantenne 21 in der Weise, daß diese entweder mit der Frequenz des Sendesignales weitgehend übereinstimmt oder wesentlich davon abweicht, wobei die individuelle Kennung des Datenträgers durch den zeitlichen Verlauf der Eigenfrequenz der Reflektorantenne 21 dargestellt ist.

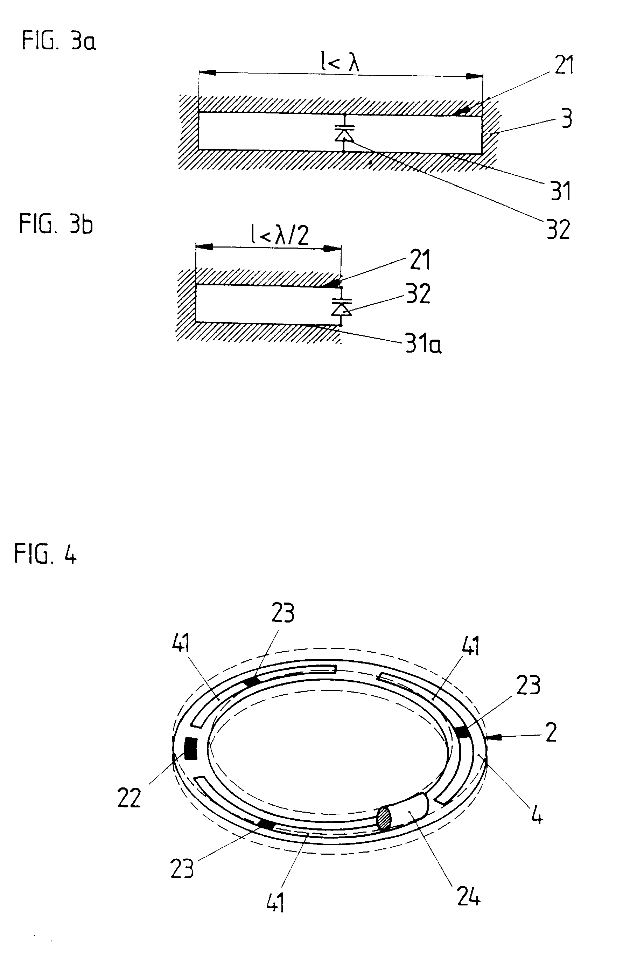

Die Reflektorantenne 21 ist als Schlitzantenne ausgebildet, sie wird anhand der Fig.3a und 3b näher erläutert.

Die Schlitzantenne nach Fig.3a besteht aus einem Metallblech 3, welches einen Schlitz 31 aufweist, dessen Länge 1 < λ ist, wobei λ die Wellenlänge des Sendesignals darstellt. Zwischen die beiden Ränder des Schlitzes 31 ist eine Kapazitätsdiode 32 eingesetzt, durch welche die elektrisch wirksame Länge des Schlitzes 31 und damit die Eigenfrequenz der durch das Metallblech gebildeten Schlitzantenne 3 in Abhängigkeit von der eingeprägten Spannung verändert wird.

Alternativ zu einer einzelnen Kapazitätdiode kann die steuerbare Impedanz auch mit zwei Kapazitätsdioden aufgebaut werden, die HF-mäßig in Serie und NF-mäßig parallel geschaltet sind.

In Fig. 3b ist eine Ausführungsvariante der Schlitzantenne dargestellt, bei der sich der Schlitz 31a nur über die halbe Länge erstreckt, wobei die steuerbare Impedanz, insbesondere eine Kapazitätsdiode 32 , am einen Ende des Schlitzes 31a angeordnet ist .

Auch durch diese Anordnung erfolgt eine Veränderung der elektrisch wirksamen Länge des Schlitzes 31a in Abhängigkeit von der Spannung an der bzw den Kapazitätsdioden.

Der in Fig. 4 dargestellte Datenträger 2 besteht aus einem aus Metall gefertigten Ring 4, der über seinen Umfang drei Schlitze 41 aufweist, die drei Reflektorantennen bilden. Weiters umfaßt er einen Datengenerator 22, welcher von einer Batterie 24 als Energiequelle gespeist wird und steuerbare Impedanzen 23 ansteuert, welche in die Schlitze 41 eingesetzt und an deren längsverlaufende Berandungen angeschlossen sind.

Die steuerbaren Impedanzen 23 sind mittels Kapazitätsdioden aufgebaut, sie modulieren die Eigenfrequenz der durch die Schlitze 41 gebildeten Reflektorantennen entsprechend der an ihnen anliegenden Spannung, sodaß der Verlauf der Eigenfrequenz die individuelle Kennung des Datenträgers wiedergibt. Diese Information wird an von der Antenne reflektierte HF-Signale weitergegeben, da die Reflexionseigenschaften der Reflektorantenne bekanntlich vom Grad der Übereinstimmung zwischen HF-Signal und Eigenfrequenz der Antenne abhängen. Durch Bestrahlung der Reflexionsantenne mit einem HF-Signal und Empfang des reflektierten HF-Signales ist somit über relativ große Entfernungen die individuelle Kennung des Datenträgers abfragbar, wobei der Energieverbrauch im Datenträger sehr gering gehalten werden kann.

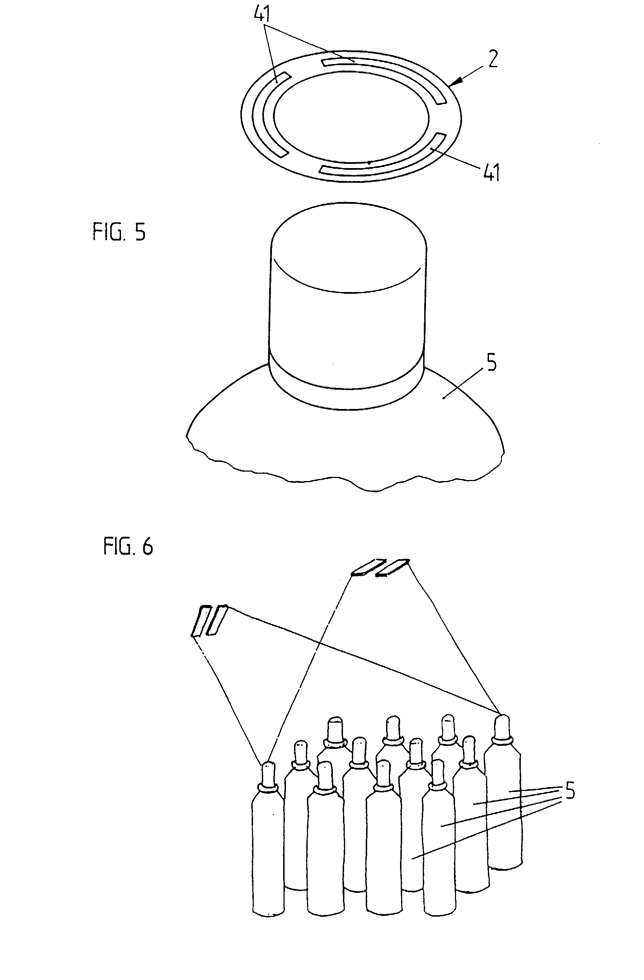

Die Fig. 5 zeigt einen kreisförmigen Datenträger 2 für Gasflaschen 5, der am Hals der Gasflasche 5 befestigt wird. Durch die Ausgestaltung mit drei Reflektorantennen 41, ist die Reflexionseigenschaft im wesentlichen richtungsunabhängig, wodurch der Datenträger aus jeder Richtung abgetastet werden kann und die Lage der Gasflasche während der Abtastung keine Rolle spielt.

Die Reflektorantenne 4 wird beim vorliegenden Ausführungsbeispiel durch ein Metallblech gebildet, welches mit mindestens einem Schlitz 41 versehen ist. Sie kann jedoch auch mittels einer herkömmlichen metallisch beschichteten Printplatte realisiert werden.

Um die mechanische Beanspruchbarkeit zu erhöhen, können die Reflektorantenne, der Datengeber, die Batterie und die steuerbare Impedanz mit einem Kunststoffmaterial umgossen werden, wobei gewährleistet sein muß, daß dieser Mantel das HF-Feld nicht soweit stört, daß die Funktionsfähigkeit des Datenträgers gefährdet ist. Alternativ kann der Datenträger auch mit einem herkömmlichen Gehäuse vorzugsweise aus nichtleitendem Kunststoff versehen werden.

Wenn mehrere Datenträger gleichzeitig abgetastet werden und damit gleichzeitig reflektieren, kann es durch Überlagerung der Reflexionssignale zur sogenannten Blockierung kommen, d.h. daß kein einziges Reflexionssignal entschlüsselt werden kann. Dies kann beispielsweise bei Gasflaschen der Fall sein wenn mehrere davon gleichzeitig auf Lastkraftwagen transportiert werden.

Das erfindungsgemäße Verfahren zur Steuerung der Datenträger verringert diese Blockierungswahrscheinlichkeit.

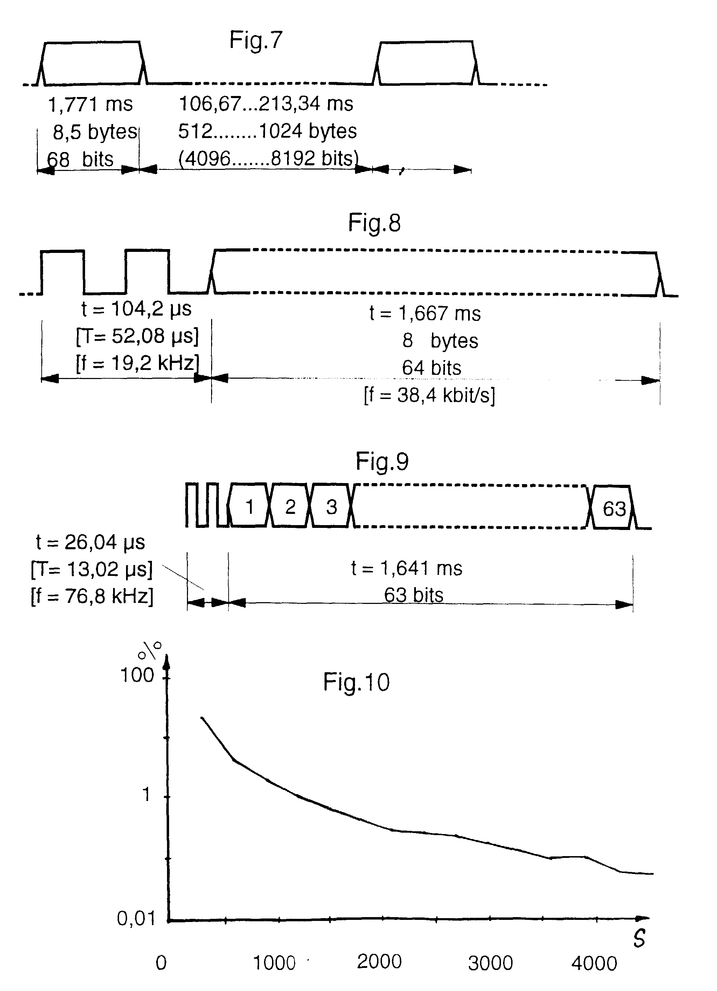

Wie in Fig.7 dargestellt, wird die Reflektorantenne eines Datengebers von einer in diesem angeordneten Steuereinrichtung innerhalb eines periodisch wiederkehrenden Zeitraumes frequenzmoduliert, wobei dieser Zeitraum in zwei Abschnitte A und B unterteilt ist. Der wesentlich kürzere erste Abschnitt A weist eine zeitliche Länge von 1,771 ms auf, wogegen der zweite Abschnitt B eine zeitliche Länge von 106,67 ms bis 213,34 ms aufweist . Innerhalb des ersten Abschnittes A wird die Reflektorantenne frequenzmoduliert, wodurch der dem betreffenden Datenträger eingeprägte Code, der die individuelle Kennung des Datenträgers repräsentiert, mittels einer zugeordneten Sende- und Empfangseinrichtung abtastbar ist. Demgegenüber erfolgt im zweiten Abschnitt B keine Modulation der Reflektorantenne, wodurch keinerlei Daten abtastbar sind.

Durch ein Kontrollsignal am Ende des ersten Abschnittes A kann die Erkennungssicherheit erhöht werden. In diesem Fall weist der Teil A eine zeitliche Länge von 1,875 ms auf.

Wie aus Fig. 8 ersichtlich ist, ist der erste zeitliche Abschnitt A in zwei Teilbereiche A1 mit einer Länge von 104,2 µs und A2 mit einer Länge von 1,667 ms unterteilt, wobei im ersten Teilbereich A1 ein Steuersignal abtastbar ist, wogegen im zweiten Teilbereich A2 der eigentliche Code des betreffenden Datenträgers abtastbar ist.

Wie bereits erwähnt, kann zur Erhöhung der Erkennungssicherheit noch ein dritter Teilbereich am Ende des Abschnittes A mit einer Länge von beispielsweise 104,2 µs vorgesehen werden, der ein weiteres Steuersignal enthält.

Wie schließlich aus Fig. 9 ersichtlich ist, enthält der zweite Teilbereich A2 am Beginn ein Synchronisationssignal, welches durch zwei Impulse innerhalb von 26,04 µs gebildet wird. Hierauf folgen 63 Signalblöcke, welche den betreffenden Code des Datenträgers beinhalten.

Beim Ausführungsbeispiel werden dabei die digitalen 0-Werte durch zwei Impulse mit einer Länge von 6,51 µs und die digitalen 1 -Werte durch einen einzigen Impuls mit einer Länge von 13,02 µs, jeweils innerhalb eines Zeitraumes von 26,04 µs, gebildet.

Zur Abtastung einer Gruppe von Datenträgern dient eine Sendeeinrichtung, von welcher ein Signal abgestrahlt wird, welches durch die Reflektorantennen reflektiert werden kann, wobei die Reflexionssignale mittels einer Empfangseinrichtung erfaßbar sind. Die zeitlichen Abschnitte A, innerhalb welcher die Reflektorantennen der einzelnen Datenträger frequenzmoduliert werden, sind wesentlich kürzer als die zeitlichen Abschnitte B, innerhalb welcher keine Frequenzmodulation der Reflektorantennen erfolgt.

Dabei können die Zeitgeber für die Steuereinrichtungen der einzelnen Datenträger zu unterschiedlichen Zeiten in Betrieb genommen werden. Zudem sind die zweiten zeitlichen Abschnitte B von unterschiedlichen Datenträgern unterschiedlich lang. Schließlich sind aufgrund von Ungenauigkeiten der in den einzelnen Datenträgern enthaltenen Zeitgeber die Abschnitte A und B in unterschiedlichen Datengeber nicht völlig gleich, sondern weichen im Lauf der Zeit immer mehr voneinander ab. Durch sämtliche dieser Faktoren ist die Wahrscheinlichkeit, daß die zeitlichen Abschnitte A zweier Datenträger innerhalb einer Abtastperiode zusammenfallen, wodurch Blockierung auftreten kann, sehr gering. Die Wahrscheinlichkeit, daß sich Datenträgern gegenseitig stören, sinkt überdies mit der Anzahl der Abtastperioden, über welche sich ein Abtastvorgang erstreckt, an.

Das Diagramm gemäß Fig. 10 zeigt bei einer Gruppe mit einer Anzahl von zwölf Datenträgern die Wahrscheinlichkeit von Störungen infolge des gleichzeitigen Auftretens von zwei Abtastsignalen über die Länge des Abtastzeitraumes in Prozenten an. Es sind dabei die Zeitabschnitte gemäß dem Ausführungsbeispiel nach Fig. 7 zugrundegelegt.

## Patentansprüche

1. Datenträger zur Identifizierung von Objekten, insbesondere von Gütern, mit einem Datengeber und mit einer Energiequelle, dadurch gekennzeichnet, daß er zumindest einen HF-Signalreflektor(21) enthält, dessen Eigenfrequenz durch den Datengeber(22) steuerbar ist.

2. Datenträger nach Patentanspruch 1, dadurch gekennzeichnet, daß der mindestens eine Signalreflektor (21) durch eine Schlitzantenne(3) gebildet ist.

3. Datenträger nach Patentanspruch 2, dadurch gekennzeichnet, daß die Schlitzantenne(3) aus einem mit einer Metallschicht versehenen Träger aus Kunststoff gefertigt ist, wobei die Metallschicht einen Schlitz aufweist.

4. Datenträger nach einem der Patentansprüche 1 bis 3, dadurch gekennzeichnet, daß zur Steuerung der Eigenfrequenz des Signalreflektors (21) eine vom Datengeber(22) steuerbare Impedanz(23) vorhanden ist.

5. Datenträger nach Patentanspruch 4 mit einer Schlitzantenne nach Patentanspruch 2, dadurch gekennzeichnet, daß die steuerbare Impedanz durch zwei Kapazitätsdioden gebildet ist, welche zwischen die beiden Längsränder(31) der Schlitzantenne(3) in der Weise eingesetzt sind, daß sie hochfrequenzmäßig in Serie und niederfrequenzmäßig parallel geschaltet sind.

6. Datenträger nach einem der Patentansprüche 1 bis 5, dadurch gekennzeichnet, daß die Energiequelle eine Batterie (24), insbesondere eine Lithiumbatterie, umfaßt.

7. Datenträger nach einem der Patentansprüche 1 bis 5, dadurch gekennzeichnet, daß die Energiequelle ein Photovoltaik-Element umfaßt.

8. Datenträger nach einem der Patentansprüche 1 bis 7,dadurch gekennzeichnet, daß der Datenträger (22), mit einem Kunststoffmaterial umspritzt ist.

9. Datenträger nach einem der Patentansprüche 1 bis 8, dadurch gekennzeichnet, daß mehrere teilkreisförmig gekrümmte Signalreflektoren(41) zu einem Kreisring zusammengefügt sind.

10. Abtasteinrichtung zur Abfrage eines Datenträgers nach einem der Patentansprüche 1 bis 9, dadurch gekennzeichnet, daß eine HF-Sendeeinrichtung(11) und eine HF-Empfangseinrichtung (13) sowie eine Auswerteschaltung vorhanden sind.

11. Verfahren zur Steuerung eines Datenträgers nach einem der Patentansprüche 1 bis 9, dadurch gekennzeichnet, daß die Steuerung der Reflektorantenne durch den Datengeber periodisch wiederkehrend erfolgt, daß die Periodendauer einem vorgegebenen Zeitraum entspricht, daß dieser Zeitraum in zumindest zwei Abschnitte(A, B) unterteilt ist und in einem ersten Abschnitt(A) die Eigenfrequenz der Reflektorantenne durch den Datengeber in der Weise moduliert wird, daß mittels einer Abtasteinrichtung eine individuelle Kennung abfragbar ist, und daß in einem zweiten Abschnitt(B) keine Steuerung der Eigenfrequenz der Reflektorantenne erfolgt.

12. Verfahren nach Patentanspruch 11, dadurch gekennzeichnet, daß die zeitliche Länge des zweiten Abschnitts (B) ein Vielfaches der zeitlichen Länge des ersten Abschnittes(A) beträgt.

13. Verfahren nach einem der Patentansprüche 11 oder 12, dadurch gekennzeichnet, daß der Beginn des ersten Abschnittes(A) durch ein Synchronisationssignal und das Ende durch ein Kontrollsignal markiert wird.

14. Verfahren nach einem der Patentansprüche 11 bis 13, dadurch gekennzeichnet, daß die individuelle Kennung jedes Datenträgers als digitaler Code im Datengeber(22) gespeichert ist, daß dieser Code in eine orthogonale Impulsfolge umgesetzt wird mit welcher die Eigenfrequenz des Signalreflektors (21) moduliert wird.

15. Verfahren nach einem der Patentansprüche 11 bis 14 , dadurch gekennzeichnet , daß in einer Gruppe von Datengebern die vorgegebenen Zeiträume unterschiedlich lang sind, wobei sie vorzugsweise jeweils ein ganzzahliges Mehrfaches einer vorgegebenen Zeitdauer betragen und daß die Zeiträume zueinander zeitlich verschoben sind.

16. Verfahren nach einem der Patentansprüche 11 bis 15, dadurch gekennzeichnet, daß durch Einsatz von Zeitsteuerelementen mit begrenzter Genauigkeit die vorgegebenen Zeiträume (A, B) unterschiedliche Längen aufweisen.

## Claims

1. Data medium for identifying objects, in particular goods, having a data transmitter and having an energy source, characterized in that it contains at least one HF signal reflector (21) whose natural frequency can be controlled by the data transmitter (22).

2. Data medium according to Patent Claim 1, characterized in that the at least one signal reflector (21) is formed by a slot antenna (3).

3. Data medium according to Patent Claim 2, characterized in that the slot antenna (3) is produced from a plastic substrate provided with a metal layer, the metal layer having a slot.

4. Data medium according to one of Patent Claims 1 to 3, characterized in that an impedance (23) which can be controlled by the data transmitter (22) is present for controlling the natural frequency of the signal reflector (21).

5. Data medium according to Patent Claim 4 and having a slot antenna according to Patent Claim 2, characterized in that the controllable impedance is formed by two variable-capacitance diodes which are inserted between the two longitudinal edges (31) of the slot antenna (3) in such a way that they are connected in series in terms of high frequency, and in parallel in terms of low frequency.

6. Data medium according to one of Patent Claims 1 to 5, characterized in that the energy source comprises a battery (24), in particular a lithium battery.

7. Data medium according to one of Patent Claims 1 to 5, characterized in that the energy source comprises a photovoltaic element.

8. Data medium according to one of Patent Claims 1 to 7, characterized in that the data medium (22) is encapsulated with a plastic material by means of injection moulding.

9. Data medium according to one of Patent Claims 1 to 8, characterized in that a plurality of signal reflectors (41) curved in the shape of circular arcs are combined to form an annulus.

10. Scanning device for interrogating a data medium according to one of Patent Claims 1 to 9, characterized in that an HF transmitting device (11) and an HF receiving device (13) as well as an evaluation circuit are present.

11. Method for controlling a data medium according to one of Patent Claims 1 to 9, characterized in that the control of the reflector antenna is performed by the data transmitter in a periodically recurring fashion, in that the period corresponds to a prescribed time interval, in that said time interval is subdivided into at least two sections (A, B) and in a first section (A) the natural frequency of the reflector antenna is modulated by the data transmitter in such a way that an individual identifier can be interrogated by a scanning device, and in that the natural frequency of the reflector antenna is not controlled in a second section (B).

12. Method according to Patent Claim 11, characterized in that the temporal length of the second section (B) is a multiple of the temporal length of the first section (A).

13. Method according to one of Patent Claims 11 or 12, characterized in that the start of the first section (A) is marked by a synchronization signal, and the end is marked by a control signal.

14. Method according to one of Patent Claims 11 to 13, characterized in that the individual identifier of each data medium is stored as digital code in the data transmitter (22), and in that said code is converted into an orthogonal pulse sequence by means of which the natural frequency of the signal reflector (21) is modulated.

15. Method according to one of Patent Claims 11 to 14, characterized in that in a group of data transmitters the prescribed time intervals are of different length, said time intervals preferably respectively being an integral multiple of a prescribed period, and in that the time intervals are temporarily displaced relative to one another.

16. Method according to one of Patent Claims 11 to 15, characterized in that the prescribed time intervals (A, B) are of different length owing to the use of time control elements of limited accuracy.

## Revendications

1. Support de données permettant d'identifier des objets, en particulier des marchandises, à l'aide d'un transmetteur de données et d'une source d'énergie, caractérisé en ce qu'il contient au moins un réflecteur de signaux HF (21) dont la fréquence propre peut être commandée par le transmetteur de données (22).

2. Support de données selon la revendication 1, caractérisé en ce que ledit au moins un réflecteur de signaux (21) est conçu comme une antenne fendue (3).

3. Support de données selon la revendication 2, caractérisé en ce que l'antenne fendue (3) est constituée d'un support en plastique pourvu d'une couche métallique, la couche métallique comportant une fente.

4. Support de données selon l'une des revendications de 1 à 3, caractérisé en ce qu'il est prévu une impédance (23) pouvant être commandée par le transmetteur de données (22) pour la commande de la fréquence propre du réflecteur de signaux (21).

5. Support de données selon la revendication 4 ayant une antenne fendue selon la revendication 2, caractérisé en ce que l'impédance pouvant être commandée est constituée de deux diodes à capacité variable, placées entre les deux bords longitudinaux (31) de l'antenne fendue (3) de façon qu'elles soient montées en série pour les hautes fréquences et en parallèle pour les basses fréquences.

6. Support de données selon l'une des revendications de 1 à 5, caractérisé en ce que la source d'énergie comprend une batterie (24), en particulier une batterie au lithium.

7. Support de données selon l'une des revendications de 1 à 5, caractérisé en ce que la source d'énergie comprend un élément photovoltaïque.

8. Support de données selon l'une des revendications de 1 à 7, caractérisé en ce que le support de données (2) est couvert par extrusion d'une matière plastique.

9. Support de données selon l'une des revendications de 1 à 8, caractérisé en ce que plusieurs réflecteurs (41) de signal courbés ayant la forme de portions de cercle sont réunis sur un anneau de cercle.

10. Dispositif de lecture permettant d'interroger un support de données selon l'une des revendications de 1 à 9, caractérisé en ce qu'il est prévu un dispositif d'émission HF (11) et un dispositif de réception HF (13) de même qu'un circuit d'exploitation.

11. Procédé permettant de commander un support de données selon l'une des revendications de 1 à 9, caractérisé en ce que la commande de l'antenne à réflecteur par le transmetteur de données se reproduit périodiquement, que la durée de la période correspond à un intervalle de temps prédéterminé, que cet intervalle est divisé en au moins deux laps de temps (A, B) et que dans un premier laps de temps (A) la fréquence propre de l'antenne à réflecteur est modulée par le transmetteur de données de façon qu'une identité individuelle puisse être interrogée au moyen d'un dispositif de lecture, et que dans un second laps de temps (B), la fréquence propre de l'antenne à réflecteur n'est pas commandée.

12. Procédé selon la revendication 11, caractérisé en ce que la durée du second laps de temps (B) est un multiple de la durée du premier laps de temps (A).

13. Procédé selon l'une des revendications 11 ou 12, caractérisé en ce que le début du premier laps de temps (A) est marqué par un signal de synchronisation et la fin par un signal de contrôle.

14. Procédé selon l'une des revendications 11 à 13, caractérisé en ce que l'identité individuelle de chaque support de données est enregistrée dans le transmetteur de données (22) sous la forme d'un code numérique, que ce code est converti en une suite impulsionnelle orthogonale avec laquelle la fréquence propre du réflecteur de signaux (21) est modulée.

15. Procédé selon l'une des revendications 11 à 14, caractérisé en ce que dans un groupe de transmetteurs de données, les intervalles de temps prédéterminés ont des durées différentes, ces intervalles étant de préférence chacun un multiple entier d'une durée prédéterminée, et que ces intervalles de temps sont décalés dans le temps les uns par rapport aux autres.

16. Procédé selon l'une des revendications 11 à 15, caractérisé en ce que les intervalles de temps (A, B) ont des durées différentes du fait de l'utilisation d'éléments de commande par le temps ayant une précision limitée.
